# EUROPEAN PATENT APPLICATION

(11) **EP 1 712 316 A1**
(43) Date of publication of application: **18.10.2006**
(21) Application number: 06400012.8
(22) Date of filing: 16.03.2006
(51) Int. Cl.: B23D 21/04, B21D 41/04, B21D 17/04

(54) **Apparatus for cutting, forming and grooving a pipe end**

(30) Priority: 14.04.2005 US 105607
(71) Applicant: ITT Manufacturing Enterprises, Inc., Wilmington, Delaware 19801 (US)
(72) Inventor: Andre, Michael James, Waterford, MI 48327 (US)
(74) Representative: Steimle, Josef

(57) **Abstract**

An apparatus or tool for simultaneously cutting an end and forming a groove in a tube includes at least one cutter (16) for cutting the tube and at least one roller (18) for forming a groove in the tube. The cutter can include a profile for simultaneously cutting the tube and forming a shaped end of the tube. In one aspect, a body and a carrier are used to make the at least one cutter and the at least one roller relative to the tube. In another aspect, a pair of opposing dies are used to move the at least one cutter and the at least one roller with respect to the tube. The dies can be moved by a drive shaft connected to an output of an electric power drill.

## Description

The invention is concerned with an apparatus for simultaneously cutting an end and forming a groove in a tube spaced from the end.

In the plumbing industry, water conduits have been typically formed of copper pipe. Joints between pipe sections and extemal connections to flexible conduits, faucets, etc., had been made with solder.

In rough framing a building or home, the pipes are mounted within the wall and/or floor or ceiling and terminate in a "stub out" which is a short length of pipe extending through an opening in a wall. Prior to connecting the stub outs to the building or home fixtures, a pressure test is required. A pressure gauge is attached by solder to one of the stub outs. All of the remaining stub outs are closed by caps which are also soldered on each stub out. The system is then pressurized to detect any leaks.

After the pressure test is completed, the caps and the pressure gauge are removed from the stub outs and the plumbing fixtures attached. Typically, a shut off valve is soldered to many of the stub outs, with an external conduit, which can be formed as a flexible hose, attached to the shut off valve by solder or tightenable compression fittings.

As is evident from the typical building or home plumbing installation, a considerable amount of time is involved in soldering the caps and the pressure gauge to all of the stub outs to perform the code required pressure test and then unsoldering the caps and the pressure gauge prior to soldering shut off valves to the stub outs for connection to the building plumbing fixtures. As a result, the plumbing industry is under increasing pressure to migrate to easy connections for service and hook up of building and home water supply systems. Such easy connections must take into account the code required sealed system pressure test and the typical drywalling around a stub out prior to the connection to the final shut off valve.

Thus, it would be desirable to provide a tool to make a grooved endform or profile on the stub out suitable for connection to a water supply component having quick connection features. It would also be desirable to provide a tool to make a grooved endform that can be a manual hand tool or a power tool. It would also be desirable to provide a tool for making a groove and tube length cutting for any tube and profile application including such non-limiting examples of plumbing, automotive, and industrial applications.

The present invention is an apparatus or tool for simultaneously cutting an end and forming a groove profile on a tube. The tool includes means for cutting the tube to length, means for forming a groove in the tube, and means for moving the cutting means and the groove forming means relative to the tube. The cutting means can include at least one cutter. The groove forming means can include at least one roller. The cutting means can include means for simultaneously cutting the tube and forming a rounded and/or chamfered profile on the cut end of the tube.

In this aspect, the means for moving the cutting means and the groove forming means relative to the tube includes a body, a carrier, and carrier moving means for moving the carrier relative to the body. The body includes the at least one cutter and the at least one roller. The body can also include adjustment means to accommodate a plurality of different diameter tubes. The adjustment means can include detent means, a restraint, and indicia associated with different tube diameters. The carrier includes another cutter and another roller positioned in opposition to the at least one cutter and at least one roller of the body, respectively.

In another aspect, the means for moving the cutting means and groove forming means relative to the tube includes a pair of opposing dies, a first gear for rotatably moving the cutting means and the groove forming means relative to the tube, means for moving the dies relative to each other, and translation means for translating relative movement between the dies into movement of the cutting means and the groove forming means in a perpendicular direction relative to a longitudinal axis of the tube. The translation means can include an angled surface on the cutting means and the groove forming means which has a complementary shape to a pocket of each die. The means for moving the dies relative to each other and rotating the gear relative to the tube can include a drive shaft. An output of an electric power drill, which can be battery powered and/or plug in, can provide means for rotating the drive shaft.

The present tool allows the use of fluid quick connectors to provide an easy attachment to existing building plumbing without requiring time consuming soldering of pipe connections. This is especially advantageous during the initial pressure testing of building plumbing which requires caps to be soldered over the open ends of all stub outs before the system is pressurized. The caps are subsequently removed and other fluid conduits, stop valves, etc., connected to the stub outs in a normal fashion. The present tool cuts an end of the stub out and forms a grooved endform suitable for connection to a water supply component having quick connection features to replace all of the soldering. The present tool eliminates these time consuming procedures by enabling a single quick connector containing a shut off valve, etc., to be attached in a simple slide-on manner to a stub out.

The various features, advantages and other uses of the present invention will become more apparent by referring to the following detailed description and drawing in which:
- Fig. 1: is a side elevational view of a tool for simultaneously cutting an end and forming a groove in a tube;
- Fig. 2: is a side elevational view of the tool shown in Fig. 1 showing the tube prior to cutting and groove forming;
- Fig. 3: is a side elevational view of the tool shown in Fig. 1 showing the tube after cutting and groove forming;
- Fig. 4: is a simplified perspective view of the tube before using the tool;
- Fig. 5: is a simplified perspective view of the tube after using the tool;
- Fig. 6: is a front elevational view of the tool shown in Fig. 1;
- Fig. 7: is a rear elevational view of the tool shown in Fig. 1;
- Fig. 8: is a cross sectional view of the tool generally taken along line 8-8 in Figure 6;
- Fig. 9: is a partial cross sectional view of another aspect of the tool according to the present invention;
- Fig. 10: is a simplified side view of the tool shown in Fig. 9;
- Fig. 11: is a simplified perspective view of the die assembly shown in Fig. 10;
- Fig. 12: is a partially exploded, perspective view of the die assembly shown in Fig. 10;
- Fig. 13: is a partial cross-sectional view of the tool taken generally along line 13-13 of Fig. 10;
- Fig. 14: is a partial cross-sectional view of the tool taken generally along line 14-14 of Fig. 10;
- Fig. 15: is a side elevational view of a cutter of the tool shown in Figs. 7 and 10;
- Fig. 16: is an exploded perspective view of the cutter shown in Figs. 7, 10, and 11;
- Fig. 17: is a side elevational view of a roller of the tool shown in Figs. 7 and 10; and
- Fig. 18: is an exploded perspective view of the roller shown in Figs. 7, 10, and 13.

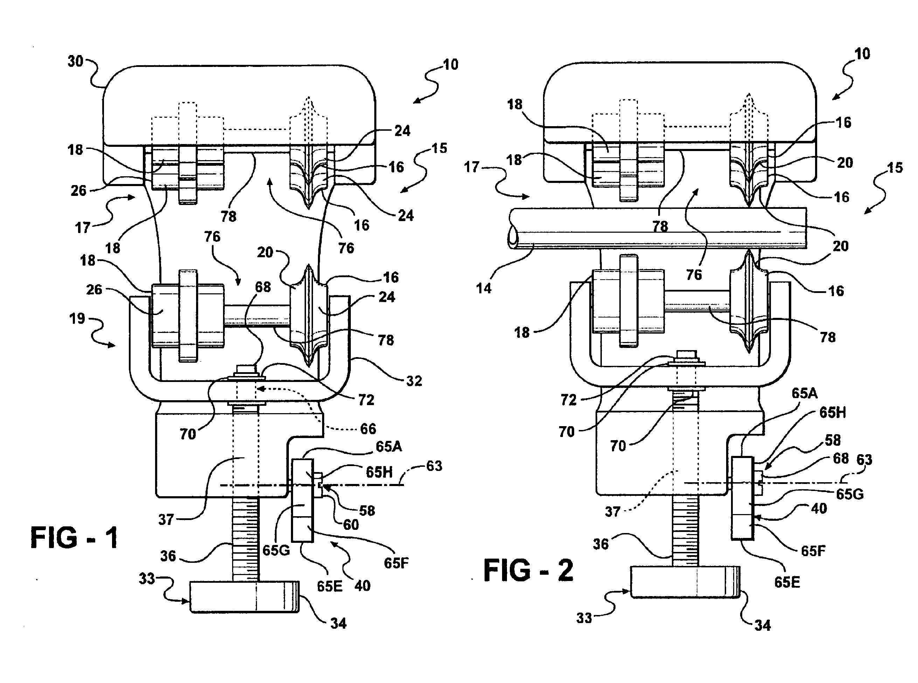

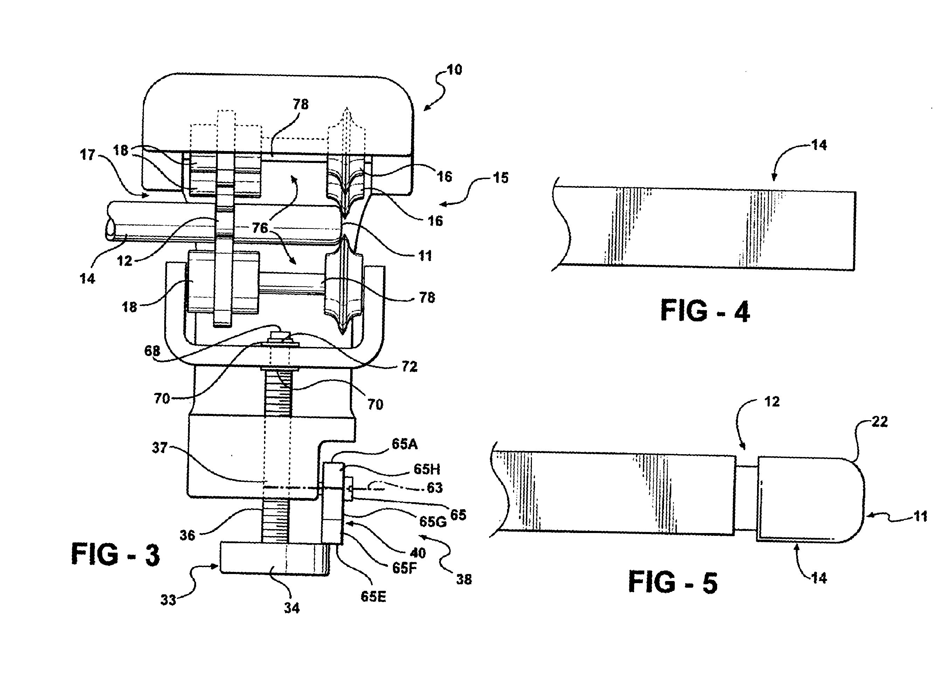

Referring to Figs. 1 to 8 of the drawing, there is depicted one aspect of an apparatus or tool 10 suitable for simultaneously cutting an end 11 to length and forming a groove 12 in a tube 14. The depth of the groove 12 and the length of the groove 12 from the end 11 of the tube 14 can be made to conform with industry standards. The groove 12 can be, for example, generally rectangular in shape, subject to industry standards. The tool 10 can be formed of metal materials which can include ferrous materials and aluminum materials. The tool 10, in the following example, includes cutting means 15, which can include at least one cutter 16 for cutting the tube, groove forming means 17, which can include at least one roller 18, for forming the groove 12 in the tube 14, and moving means 19 for moving the cutting means 15 and the groove forming means 17 relative to the tube 14. The cutting means 15 can include means 20 for simultaneously cutting the end 11 of the tube 14 and forming, by way of example and not limitation, a chamfered end and/or a rounded profile 22 on the cut end 11 of the tube 14. The cutting means 15 can include at least one cutting wheel 24. As seen in Figs. 1 to 3, 6, and 7, the groove forming means 17 can include at least one roller wheel 26. The moving means 19 can include a body 30 having at least one cutter 16 and at least one roller 18, a carrier 32 having another at least one cutter 16 and another at least one roller 18 with each positioned in opposition to the at least one cutter 16 and the at least one roller 18 of the body 30, and carrier moving means 33 for moving the carrier 32 relative to the body 30. All of the cutters 16 are coplanar as seen in Figs. 1 to 3. All of the rollers 18 are coplanar.

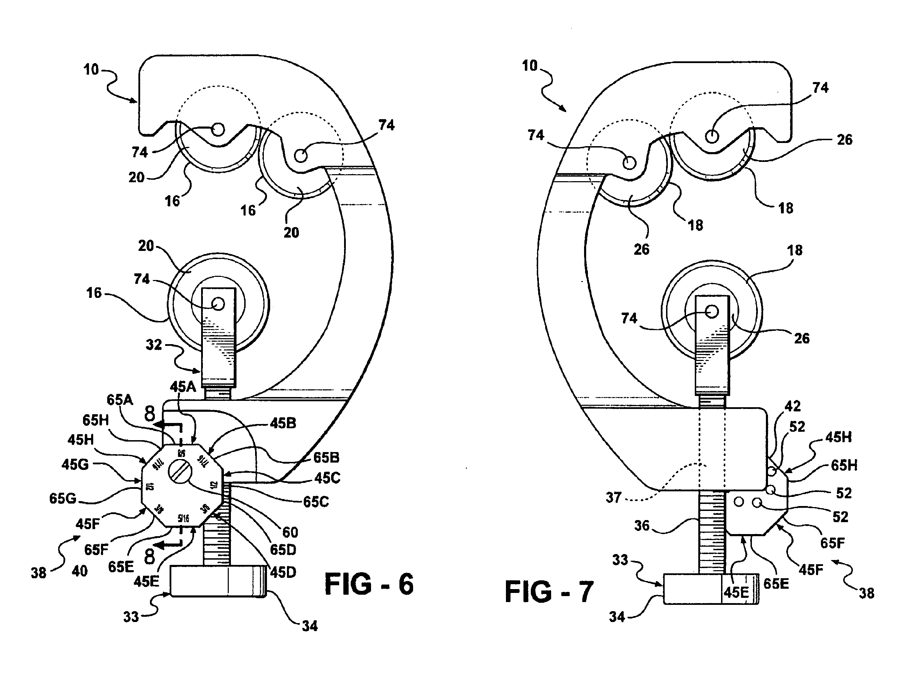

The body 30 can be generally C-shaped as best seen in Figs. 6 and 7. The carrier moving means 33 can include a rotatable member 34 having a threaded shaft 36 attachable to a bore 37, shown in phantom in Figs. 1 to 3 and 7, in the body 30 and to the carrier 32 in order to move the carrier 32 relative to the body 30 by manually rotating the member 34 by an operator, as shown in detail in Figs. 1 to 3 and 7.

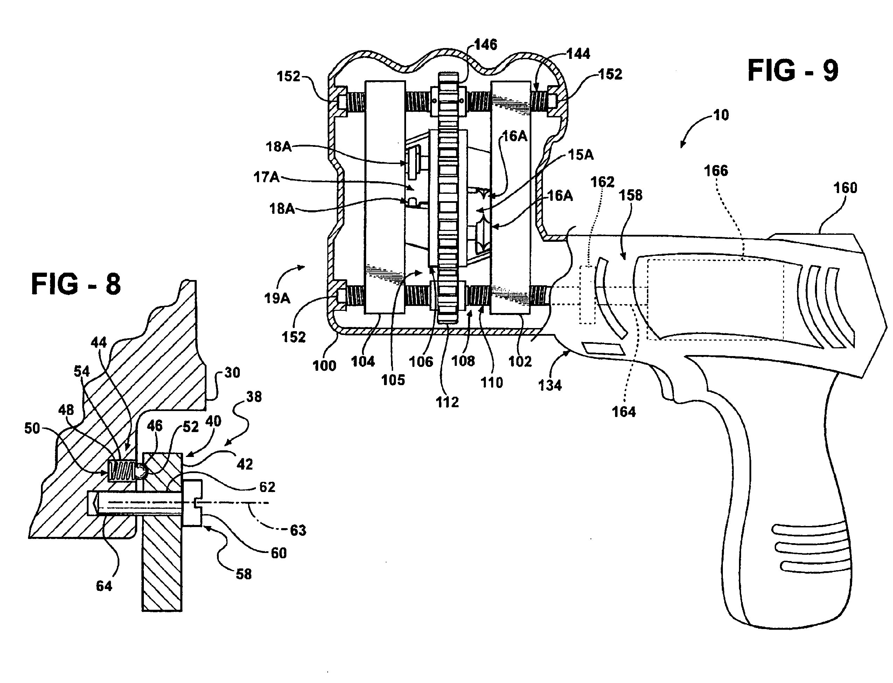

As shown in Figs. 1 to 3 and 6 to 8, the body 30 can include adjusting means 38 for adjusting the carrier moving means 33 to accommodate different diameter tubes 14. The adjusting means 38 can include an adjustable stop means 40 attachable to the body 30 as described below. The adjustable stop means 40 can include a restraint 42 and detent means 44 for defining multiple stop positions such as stop positions 45A, 45B, 45C, 45D, 45E, 45F, 45G, and 45H, for example, of the stop 42. The detent means 44 can include a member or ball 46 that can be recessed in an aperture 48 of the body 30 and biasing means 50 for biasing the ball 46 from the aperture 48 into engagement with one of a plurality of apertures 52 of the restraint 42 as depicted in Fig. 8. By way of example and not limitation, the biasing means 50 can include a spring 54. The adjusting means 38 can include a plurality of indicia 56, each associated with a different stop position 45A to H. Further, each of the indicia 56 can be associated with one restraint aperture 52. The adjustable stop means 40 can include attaching means 58 for rotatably attaching the restraint 42 to the body 30. The attaching means 58 can include a fastener 60 that, by way of example and not limitation, can be a threaded fastener. The fastener 60 can be received by a restraint fastener aperture 62 of the restraint 42 and by a corresponding fastener aperture 64 of the body 30.

The restraint 42 can be polygonally shaped where the restraint aperture 62 can be positioned so that an axis of rotation 63 of the restraint 42 is a different distance from each face 65A to H of the restraint 42, where each face 65A to H is associated with one stop position 45A to H, respectively. In operation, the movement of the rotatable member 34 in the direction of the body 30 is constrained by contact with one face 65A to H of the restraint 42. Therefore, because each face 65A to H is a different distance from the axis of rotation 63, each stop position 45A to H is associated with a different distance between the at least one cutter 16 and the at least one roller 18 of the body 30 and the at least one cutter 16 and the at least one roller 18, respectively, of the carrier 32 to accomodate different diameter tubes.

By way of example and not limitation, the threaded shaft 36 can be attached to the carrier 32 as shown in Figs. 1 to 3. The carrier 32 can include a carrier aperture 66 for receiving an unthreaded end portion 68 of the threaded shaft 36. Rotation of the end portion 68 relative to the carrier 32 can be facilitated by a pair of washers 70 where each washer 70 can be located on an opposite side of the carrier 32 and positioned concentric to the carrier aperture 66. By way of example and not limitation, a lock ring 72 can be used to secure the end portion 68 relative to the carrier 32 and to secure the washer 70.

As seen in Figs. 1 to 3, 6, and 7, the at least one cutter 16 can be a pair of cutters 16 or three cutters 16, where all of the cutters 16 are coplanar and where multiple cutters 16 are shown for force balancing of the cutters 16 relative to the tube 14. The at least one roller 16 can be a pair of roller 18 or three rollers 18 where all of the rollers 18 are coplanar and where multiple rollers 18 are shown for force balancing of the rollers 18 relative to the tube 14. The at least one cutter 16 and the at least one roller 18 can be positioned in coaxial pairs of one cutter 16 and one roller 18 where the distance between the groove 12 and the cut end 11 of the tube 14 corresponds to the distance between each cutter 16 and roller 18. Each cutter 16 and roller 18 pair can be received a shaft 74, which is received by the body 30 or the carrier 32. A preselected spacing can be maintained between each cutter 16 and each roller 18 by spacing means 76, which can include a bushing 78. The spacing between each cutter 16 and roller 18 and accordingly the distance between the cut end 11 and the groove 12 of the tube 14 can be changed by changing the bushing 78.

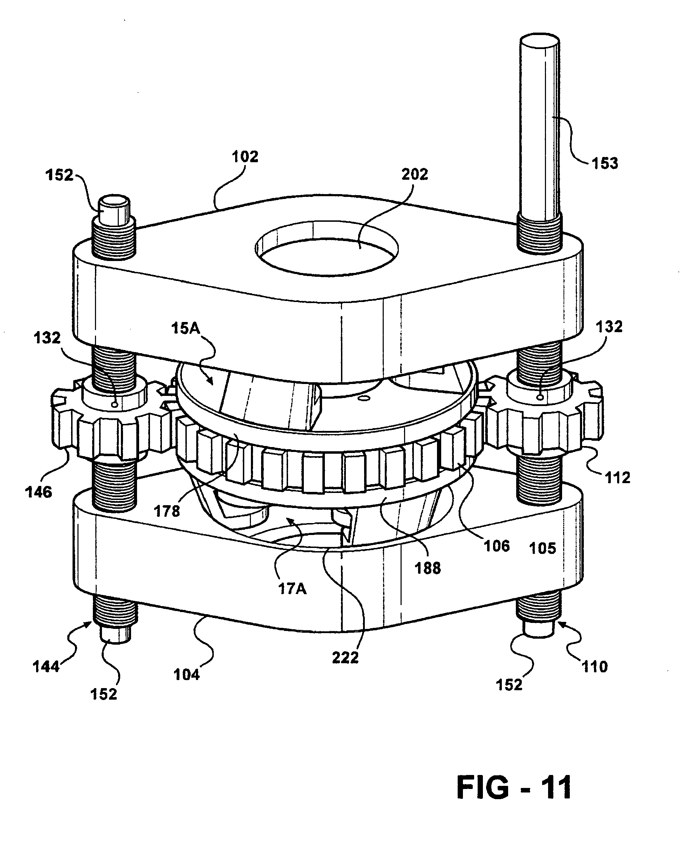

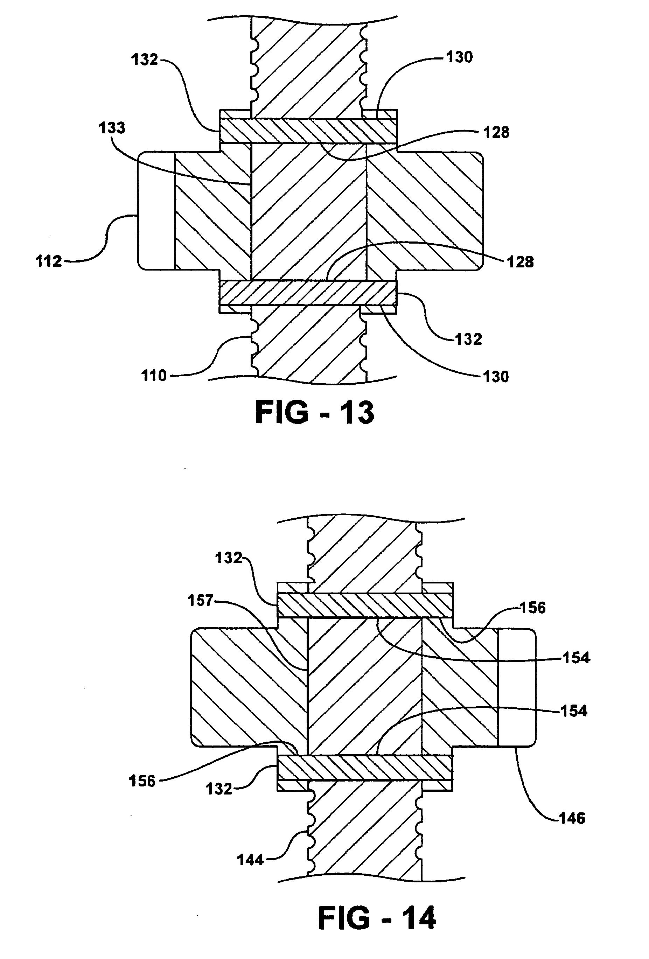

Another aspect of the tool 10 is shown in Figs. 9 to 18. The moving means 19A can be received by a housing 100. The moving means 19A can be formed of metal materials, which can include ferrous materials and aluminum materials. The housing 100 can be formed of plastic materials, metal materials, or a combination thereof.

In this example, as seen in Figs. 9 to 12, the moving means 19A can include a pair of opposing dies 102, 104, an actuator 105 including a first gear 106 for rotatably moving the cutting means 15A and the groove forming means 17A relative to the tube 14, and die moving means 108 for moving the dies 102, 104 relative to each other and rotating the first gear 106 relative to the tube 14. The cutting means 15A can include at least one cutter 16A. The at least one cutter 16A can include three cutters 16A where the cutters 16A are coplanar. The groove forming means 17A can include at least one roller 18A. The at least one roller 18A can include three rollers 18A, where the rollers 18A are coplanar. The moving means 108 can include a first or primary drive shaft 110 attachable to a second gear 112, which is in driving engagement with the first gear 106. By way of example and not limitation, the first drive shaft 110 can include a first threaded portion 114 and a second threaded portion 116, which is located opposite to the first threaded portion 114 relative to the second gear 112. The first threaded portion 114 and the second threaded portion 116 have a thread pattern 122, 123, respectively, that is complementary to die apertures 118, 119, respectively. The first threaded portion 114 can have a thread direction 124 that is opposite to the thread direction 126 of the second threaded portion 116. The drive shaft 110 is provided with a unthreaded end section 152 and unthreaded clamping end section 153.

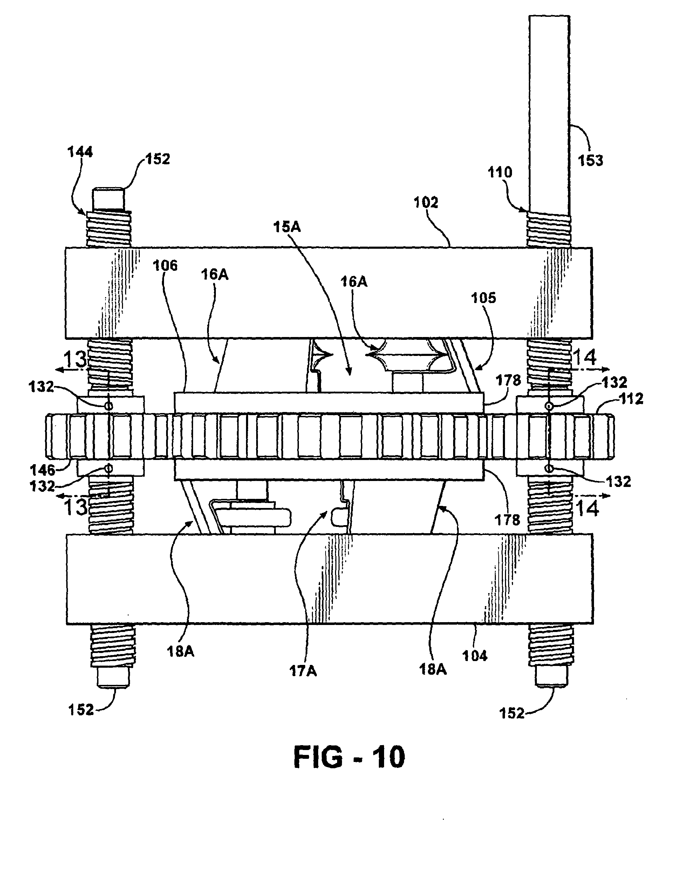

The first drive shaft 110 can include a pair of apertures 128 corresponding to a pair of apertures 130 of the second gear 112 each for receiving a fastener 132 to secure the second gear 112 relative to the first drive shaft 110, where the first drive shaft 110 is received by a bore 133 of the second gear 112, as seen in Figs. 10 to 13. By way of example and not limitation, the fastener 132 can be a pin. The moving means 108 can also include turning means 134 for turning the first drive shaft 110, at least one aperture 136 in a first surface 138 of the first gear 106 for receiving the cutter(s) 16, an aperture(s) 140 in a second surface 142 of the first gear 106 for receiving the roller(s) 18, and a second drive shaft 144 having a third gear 146 in driving engagement with the first gear 106.

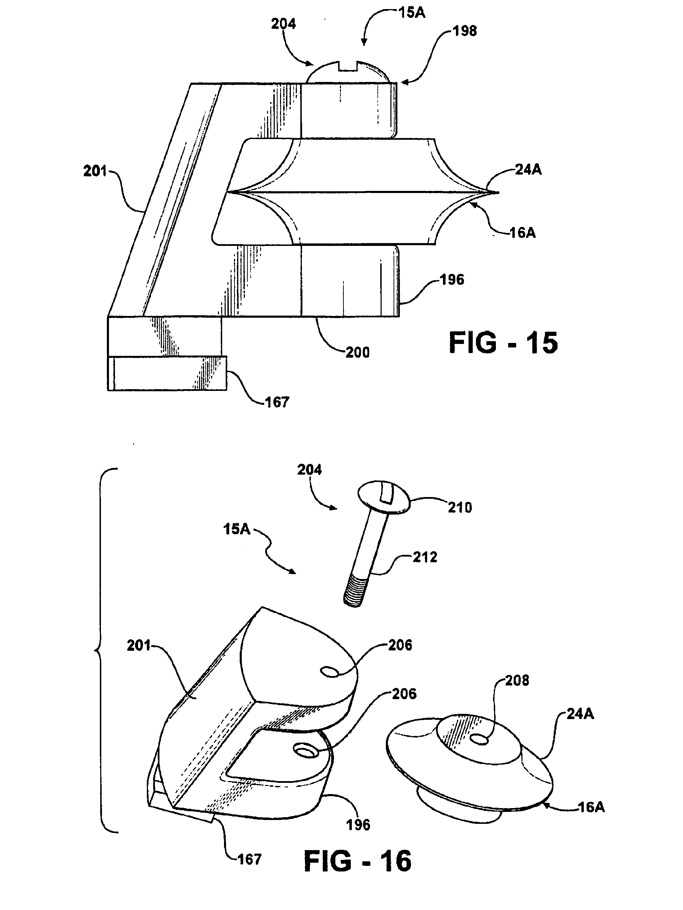

By way of example and not limitation, the second drive shaft 144 can include a first threaded portion 148, a second threaded portion 150, two unthreaded end sections 152 with each associated with one of the first threaded portion 148 and the second threaded portion 150, thread patterns 122, 123 having a complementary pattern to the threaded die apertures 118, 119, respectively, and having opposite thread directions 124, 126. As seen in Fig. 15, the second drive shaft 144 can include a pair of apertures 154 corresponding to a pair of apertures 156 of the third gear 146 each for receiving one fastener 132 to secure the third gear 146 relative to the second drive shaft 144, where the second drive shaft 144 is received by a bore 157 of the third gear 146.

Referring now to Fig. 9, the turning means 134, by way of example and not limitation, can include an output 158, shown in phantom in Fig. 9, of an electric power drill 160. The electric power drill 160 can be a plug-in power drill and/or a battery powered drill. The output 158 of the electric power drill 160 can include a chuck 162 and/or an output shaft 164 attachable to the primary drive shaft 110. The electric power drill 160 includes an electric motor 166, shown in phantom in Fig. 9.

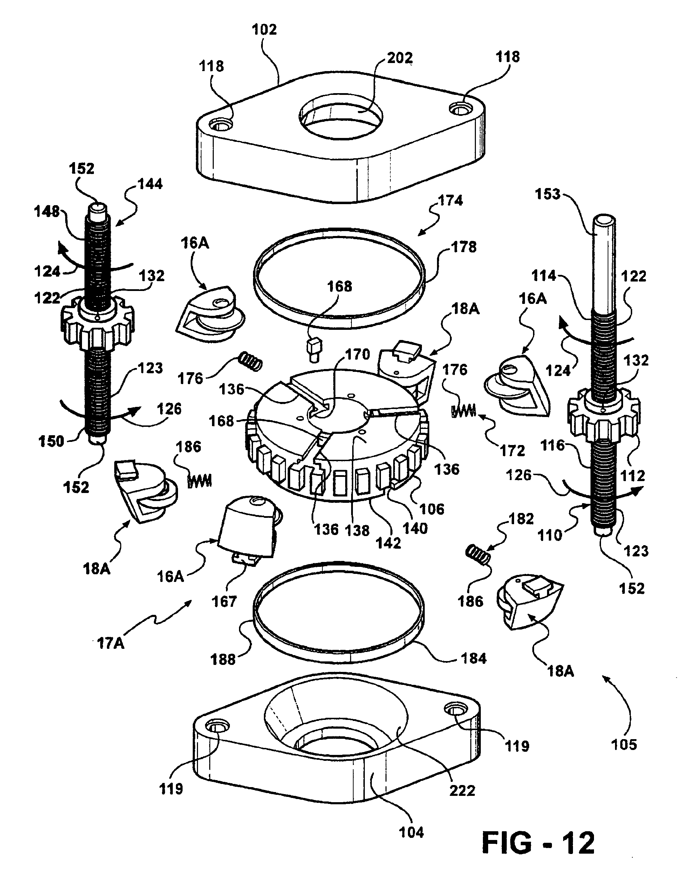

Referring now to Fig. 12, the aperture(s) 136 in the first surface 138 of the first gear 106 can be a radially extending aperture(s) which could include an open ended slot. By way of example and not limitation, the aperture(s) 136 can have a complementary shape to a protrusion 167 of the cutting means 15A. The aperture(s) 136 can be associated with a stop 168, a second aperture 170 for receiving the stop 168, biasing means 172 for biasing the cutting means 15A away from the tube 14, and securing means 174 for securing the biasing means 172 and the cutting means 15A relative to the aperture(s) 136. The biasing means 172 could include a spring 176. The securing means 174 may be a ring 178.

The aperture(s) 140 in the second surface 142 of the first gear 106 can be a radially extending aperture. The aperture(s) 140 can have a complementary shape to a protrusion 180 of the groove forming means 17A. The aperture(s) 140 can include a biasing means 182 for biasing the roller(s) 18A away from the tube 14 and securing means 184 for securing the biasing means 182 and the groove forming means 17A relative to the aperture(s) 140. By way of example and not limitation, the securing means 184 associated with the aperture(s) 140 can include a ring 188. The biasing means 182 could include a spring 186.

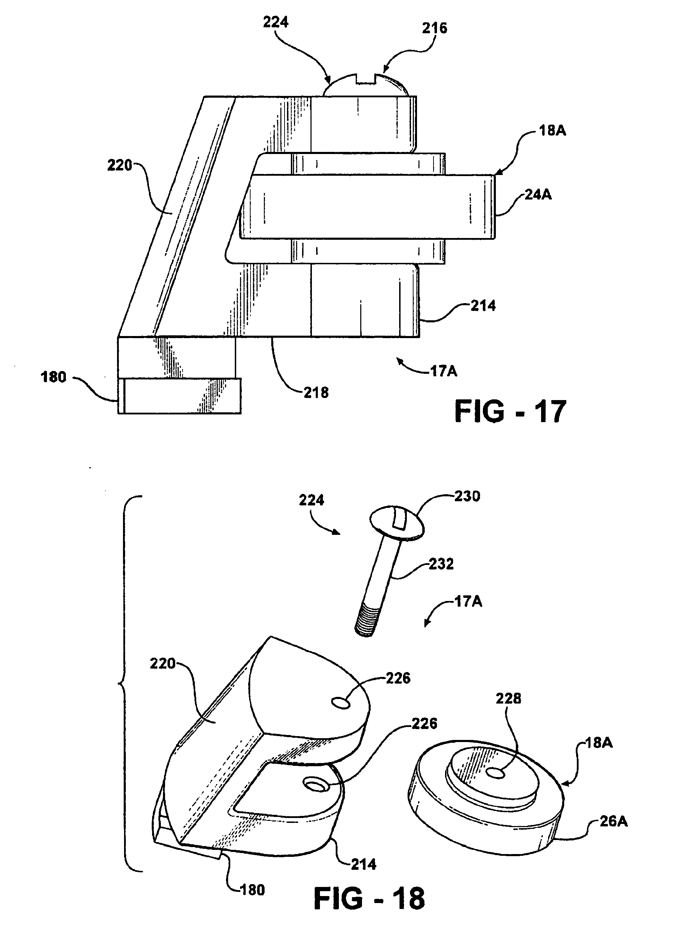

The cutting means 15A can include a base 196, a cutting wheel 24A, and rotatable attaching means 198 for rotatably attaching a cutting wheel 24A to the base 196, as seen in Figs. 16 and 17. The base 196 can include a first surface 200, the protrusion 167 located on the first surface 200, and a second surface 201 having a complementary shape to an aperture or pocket 202 of the die 102. By way of example and not limitation, the second surface 201 can be an angled surface in order to translate relative motion between the dies 102, 104 to the motion of the cutting means 15A in a perpendicular direction relative to the tube 14. The rotatable attaching means 198 can include a fastener 204, at least one aperture 206 of the base 196 for receiving the fastener 204, and a corresponding aperture 208 of the cutting wheel 24 for receiving the fastener 204. By way of example and not limitation, the fastener 204 can include a head 210 and a shaft 212.

Referring now to Figs. 18 and 19, the groove forming means 17A can include, a base 214, the roller wheel 26A, and rotatable attaching means 216 for the roller wheel 26A to the base 214. The base 214 can include a first surface 218, the protrusion 180, located on the first surface 218, and a second surface 220 having a complementary shape to an aperture or pocket 222 of the die 104. The second surface 220 may be angled in order act as means for translation to translate relative motion of the dies 102, 104 into motion of the groove forming means 17A in a perpendicular direction relative to the tube 14. The rotatable attaching means 216 can include a fastener 224, at least one aperture 226 of the base 214 for receiving the fastener 224, and a corresponding aperture 228 of the roller wheel 26 for receiving the fastener 224 having a head 230 and a shaft 232.

In operation, the dies 102, 104 are moved together and apart by the drive shafts 110, 144 acting on the threaded die apertures 118, 119. When the dies 102, 104 are moved together, this motion is translated into motion of the cutting means 15A and the groove forming means 17A as discussed above. When the dies 102, 104 are moved apart, a force exerted by the pockets 202, 222 on the second surfaces 201, 220, respectively, is reduced, and the cutting means 15A and the groove forming means 17A are moved away from the tube 14 by a force exerted on the cutting means 15A and the groove forming means 17A by the biasing means 172, 182, respectively.

## Claims

1. An apparatus (10) for simultaneously cutting an end (11) and forming a groove (12) in a tube (10) spaced from the end (11), comprising means (15) for cutting the end (11) in the tube (14), means (17) for forming the groove (12) in the tube (14) spaced from the end (11), and means (19, 33) for moving the cutting means (15) and the groove forming means (17) relative to the tube (14).

2. The apparatus of claim 1, **characterized in that** the cutting means (15) further comprises a profile for simultaneously cutting the tube (14) to a length and forming the end (11), e.g. a rounded end or a chamfered end, on the tube (14).

3. The apparatus of one of the preceding claims, **characterized in that** the cutting means (15) further comprises at least one cutter (16) and the groove forming means (17) further comprises at least one roller (18).

4. The apparatus of claim 3, **characterized in that** the moving means (19) further comprises a body (30) carrying the at least one cutter (16) and the at least one roller (18), a carrier (32) having another cutter (16) and another roller (18), respectively positioned in opposition to the at least one cutter (16) and the at least one roller (18) of the body (30), and means (33), e.g. a manually rotatable member (34) rotatable by an operator, for moving the carrier (32) relative to the body (30).

5. The apparatus of claim 4, **characterized in that** the body (30) further comprises means, e.g. a shaft (74), for rotatably attaching the at least one cutter (16) and the at least one roller (18) to the body (30); and means (76) for maintaining a pre-selected spacing between the at least one cutter (16) and the at least one roller (18).

6. The apparatus of claim 5, **characterized in that** the spacing maintaining means (76) further comprises a bushing (78) mounted between the at least one cutter (16) and the at least one roller (18).

7. The apparatus of one of claims 4 to 6, **characterized in that** the body (30) further comprises means (38) for adjusting movement of the carrier moving means (33) to accommodate a plurality of different diameter tubes (14).

8. The apparatus of claim 7, **characterized in that** the adjusting means (38) further comprises a plurality of indicia (56) each corresponding to a one of a plurality of distinct tube diameters.

9. The apparatus of claim 7 or 8, **characterized in that** the adjusting means (38) further comprises an adjustable stop (40) attached to the body (30).

10. The apparatus of claim 9, **characterized in that** the adjustable stop (40) further comprises a restraint (42) attachable to the body (30), and detent means (44) for defining a plurality of stop positions (45) for the restraint (42) relative to the carrier (32).

11. The apparatus of claim 10, **characterized in that** the restraint (42) further comprises means (58) for rotatably attaching the restraint (42) to the body (30).

12. The apparatus of claim 10 or 11, **characterized in that** the detent means (44) further comprises a member, e.g. a ball (46), movably partially recessed in a bore (48) of the body (30), means, e.g. a spring (54), for biasing the member from the bore (48) to engage the member with one of a plurality of apertures (52) of the restraint (42), each corresponding to one of the plurality of stop positions (45).

13. The apparatus of one of claims 4 to 12, **characterized in that** the carrier (32) further comprises at least one shaft (74) for rotatably attaching the at least one cutter (16) and the at least one roller (18) to the body (30), means (76), e.g. a bushing (78), for maintaining a selected spacing between the at least one cutter (16) and the at least one roller (18), and at least one pair of apertures in the carrier (32) with each aperture of the pair receiving an opposite end of the at least one shaft (74).

14. The apparatus of one of claims 4 to 13, **characterized in that** the moving means (33) further comprises a threaded shaft (36), preferable with an attached knob, attached between the body (30) and the carrier (32).

15. The apparatus of one of the preceding claims, **characterized in that** the moving means (19) further comprises a pair of opposing dies (102, 104), means (108) for moving the dies (102, 104) relative to each other, means for translating the motion of the dies (102, 104) to motion of the cutting means (15) and the groove forming means (17) in a perpendicular direction relative to a longitudinal axis of the tube (14), and an actuator (105) for rotatably moving the cutting means (15) and the groove forming means (17) relative to the tube (14).

16. The apparatus of claim 15, **characterized in that** the apparatus further comprising a housing (100).

17. The apparatus of claim 15 or 16, **characterized in that** the cutting means (15) further comprises a base (196), a cutting wheel (24), and means (198) for rotatably attaching the cutting wheel (24) to the base (196).

18. The apparatus of claim 17, **characterized in that** the base (196) further comprises a first surface (200), a protrusion (167) located on the first surface (200) and having a complementary shape to an at least one aperture (136) of a first surface (138) of a first gear (106), and a second surface (201) having a complementary shape to an aperture (202) of the die (102).

19. The apparatus of one of claims 15 to 18, **characterized in that** the groove forming means (17) further comprises a base (214), a roller wheel (26), and means (216) for rotatably attaching the roller wheel (26) to the base (214).

20. The apparatus of claim 19, **characterized in that** the base (214) further comprises a first surface (218), a protrusion (180) located on the first surface (218) and having a complementary shape to an at least one aperture (140) of a second surface (142) of a first gear (106), and a second surface (220) having a complementary shape to an aperture (222) of the die (104).

21. The apparatus of claim 18 or 20, **characterized in that** the second surface (201, 220) further comprises an angled surface.

22. The apparatus of one of claims 15 to 21, **characterized in that** the die moving means (108) further comprises at least one threaded aperture (118, 119) associated with each die (102, 104), at least one drive shaft (110, 144) having a complementary thread pattern (114, 1116, 122, 123) to the at least one aperture (118, 119), and means (134) for turning the at least one drive shaft (110).

23. The apparatus of one of claims 15 to 22, **characterized in that** the die moving means (108) further comprises a first gear (106), a first drive shaft (110) including a second gear (112) for driving the first gear (106), and a second drive shaft (144) including a third gear (146) driven by the first gear (106).

24. The apparatus of claim 23, **characterized in that** the first drive shaft (110) further comprises an aperture (128) corresponding to an aperture (130) of the second gear (112) for receiving a fastener (32) for securing the second gear (112) relative to the first drive shaft (110).

25. The apparatus of claim 23 or 24, **characterized in that** the second drive shaft (144) further comprises an aperture (154) corresponding to an aperture (156) of the third gear (146) for receiving a fastener (132) to secure the third gear (146) relative to the second drive shaft (144).

26. The apparatus of one of claims 22 to 25, **characterized in that** the turning means (134) further comprises an output shaft (164) of an electric power drill (160), e.g. a plug in power drill and/or a battery power drill.

27. The apparatus of claim 26, **characterized in that** the output (158) of the power drill (160) comprises a chuck (162) and/or a shaft (164) each attachable to the at least one drive shaft (110).

28. The apparatus of one of claims 15 to 27, **characterized in that** the translating means further comprises at least one angled surface (201, 220) on the cutting means (15) and the groove forming means (17), and at least one aperture (202, 222) associated with each die (102, 104), the at least one aperture (202, 222) having a complementary shape to the at least one angled surface (210, 220).

29. The apparatus of one of claims 15 to 28, **characterized in that** the actuator (105) further comprises a first gear (106) for rotating the cutting means (15) and/or the groove forming means (17) relative to the tube (14), a second gear (112) in driving engagement with the first gear (106), and means (134) for turning the second gear (112).

30. The apparatus of claim 29, **characterized in that** the first gear (106) further comprises at least one aperture (136) of a first surface (138) for receiving the cutting means (15), and at least one aperture (140) of a second surface (142) for receiving the groove forming means (17).

31. The apparatus of claim 30, **characterized in that** the at least one aperture (136) of the first surface (138) and/or the at least one aperture (140) of the second surface (142) further comprises a radially extending aperture.

32. The apparatus of claim 30 or 31, **characterized in that** the at least one aperture (136) of the first surface (138) further comprises a complementary shape to a protrusion (167) of the cutting means (15) and/or the at least one aperture (140) of the second surface (142) further comprises a complementary shape to a protrusion (180) the groove forming means (17).

33. The apparatus of one of claims 29 to 32, **characterized in that** the first gear (106) further comprises at least one stop (168) located in the at least one aperture (136, 140) of the first and/or second surface (138, 142), means (172, 182), e.g. a spring (176, 186), for biasing the cutting means (15) and/or the groove forming means (17) away from the tube (14), means (174, 184) for securing the biasing means (172, 182) and the cutting means (15) and/or the groove forming means (17) relative to the at least one aperture (136, 140) of the first surface (138. 142).

34. The apparatus of claim 33, **characterized in that** the securing means (174, 184) further comprises at least one ring (178, 188) mounted concentrically to the first gear (106).
